# DEMANDE DE BREVET EUROPEEN

(11) **EP 3 392 112 A1**
(43) Date de publication de la demande: **24.10.2018**
(21) Numéro de dépôt: 18168576.9
(22) Date de dépôt: 20.04.2018
(51) Int. Cl.: B61C 17/00, B61F 1/08

(54) **DISPOSITIF DE FIXATION D'UN ÉLÉMENT EN TOITURE OU EN SOUS-CHÂSSIS D'UN VÉHICULE FERROVIAIRE**

(30) Priorité: 21.04.2017 FR 1753480
(71) Demandeur: ALSTOM Transport Technologies, 93400 Saint-Ouen (FR)
(72) Inventeur: PREISS, Paul, 67110 Reichshoffen (FR); JAMET, Virginie, 67470 Mothern (FR); PEZZOLI, Julien, 67000 Strasbourg (FR); ROLL, Stéphane, 67170 Brumath (FR); PUEL, Bernard, 65310 Laloubere (FR)
(74) Mandataire: Lavoix

(57) **Abrégé**

Le dispositif de fixation (10) comporte :
- un rail (14) solidaire du véhicule ferroviaire, comprenant une gorge longitudinale centrale délimitée par deux rebords (22) agencés l'un en regard de l'autre, chaque rebord (22) présentant une face intérieure, tournée vers la gorge centrale, et une face extérieure,
- au moins une plaquette de fixation, logée dans la gorge centrale, et destinée à coopérer avec la face intérieure des rebords (22), et
- des moyens (25) de solidarisation de l'élément (12) avec la plaquette de fixation.

## Description

La présente invention concerne un dispositif de fixation d'un élément à un véhicule ferroviaire.

Par exemple, l'élément est un équipement pouvant peser jusqu'à plusieurs tonnes, situé préférentiellement en extérieur sous châssis ou en toiture du véhicule ferroviaire. Il est donc nécessaire de prévoir un dispositif de fixation adapté à cet effet.

Les dispositifs de fixation connus dans l'état de la technique, notamment ceux remplissant également une fonction anti-chute, présentent habituellement une masse importante et/ou un coût important.

L'invention a notamment pour but de remédier à cet inconvénient, en proposant un dispositif de fixation moins massif et moins coûteux qu'un dispositif de l'état de la technique.

A cet effet, l'invention a notamment pour objet un dispositif de fixation d'un élément à un véhicule ferroviaire, selon la revendication 1.

Le dispositif de fixation selon l'invention présente une structure simple et efficace.

Un tel dispositif est à la fois adapté pour une fixation d'élément sur une toiture du véhicule ferroviaire, et pour une fixation d'élément en sous-châssis du véhicule.

Un dispositif de fixation selon l'invention peut comporter en outre l'une ou plusieurs des caractéristiques suivantes, prises seules ou selon toutes combinaisons techniquement envisageables.
- Les moyens de solidarisation comportent : au moins un premier orifice de passage ménagé dans la plaquette de fixation ; pour chaque premier orifice de passage, une vis passant au travers de cet orifice de passage, et passant entre les rebords du rail ; et pour chaque vis, un écrou destiné à être vissé sur la vis correspondante, et de préférence au moins une rondelle.
- Les moyens de solidarisation comportent deux premiers orifices de passage, deux vis et deux écrous.
- Le pion de centrage est agencé entre les deux vis, de préférence à égale distance de chacune de ces deux vis.
- Le pion de centrage présente une longueur supérieure à celle de chaque vis.

L'invention concerne également un véhicule ferroviaire, caractérisé en ce qu'il comporte au moins un dispositif de fixation tel que défini précédemment.

Avantageusement, le véhicule ferroviaire comporte au moins un premier dispositif de fixation pour la fixation d'au moins un premier élément sur un toit du véhicule, et au moins un second dispositif de fixation pour la fixation d'au moins un second élément en sous-châssis du véhicule, les premier et second dispositifs de fixation étant identiques.

L'invention sera mieux comprise à la lecture de la description qui va suivre, donnée uniquement à titre d'exemple et faite en se référant aux figures annexées, parmi lesquelles :
- la figure 1 est une vue en perspective du dispositif de fixation selon un exemple de mode de réalisation de l'invention ;
- la figure 2 est une vue en perspective éclatée du dispositif de fixation de la figure 1 ; et
- la figure 3 est une vue en coupe longitudinale du dispositif de fixation de la figure 1.

On a représenté, sur les figures, un dispositif 10 de fixation d'un élément 12 à un véhicule ferroviaire, plus particulièrement à un sous-châssis ou à un toit du véhicule ferroviaire.

Le dispositif de fixation 10 comporte un rail 14, solidarisé au véhicule ferroviaire, notamment à son toit ou à son sous-châssis. Le rail 14 s'étend dans une direction longitudinale X, qui peut correspondre à une direction longitudinale ou à une direction transversale du véhicule ferroviaire.

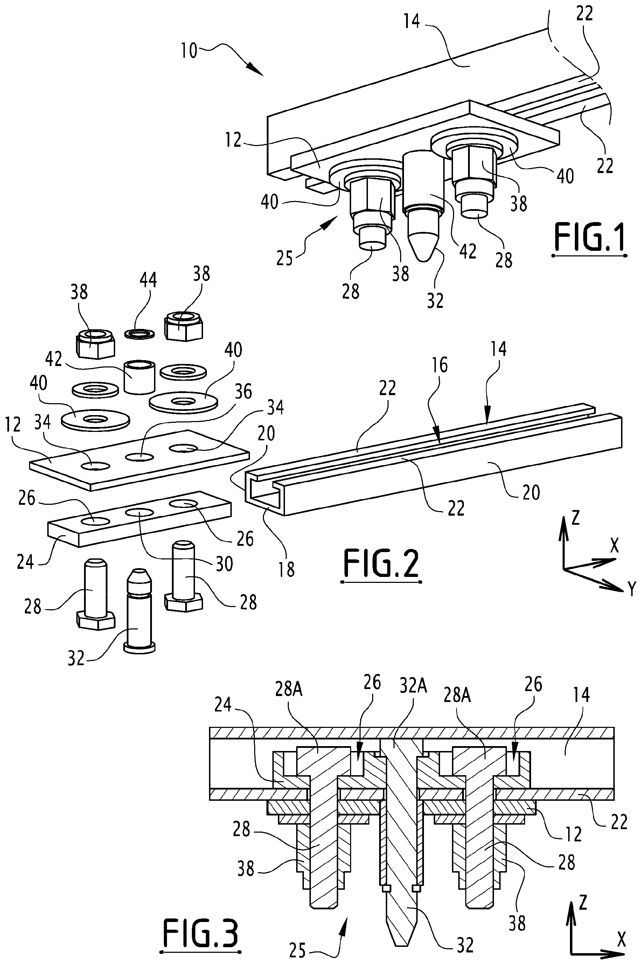

Comme cela est notamment représenté sur la figure 2, le rail 14 comprend une gorge longitudinale centrale 16 délimitée par une paroi de fond 18, des parois latérales 20 et des rebords 22.

Les parois latérales 20 sont solidaires de la paroi de fond 18 et s'étendant perpendiculairement à cette paroi de fond 18, de part et d'autre de cette paroi de fond 18 dans une direction transversale Y perpendiculaire à la direction longitudinale X.

Les deux rebords 22 agencés l'un en regard de l'autre. Plus particulièrement, les rebords 22 s'étendent, dans la direction transversale Y, entre un bord solidaire de l'une respective des parois latérales, et un bord libre. Les bords libres des rebords 22 sont ainsi agencés l'un en regard de l'autre, et délimitent entre eux une fente longitudinale, la gorge longitudinale 16 débouchant à cette fente longitudinale dans une direction verticale Z perpendiculaire aux directions longitudinale X et transversale Y.

Chaque rebord 22 présente une face intérieure, tournée vers la gorge centrale 16, et plus particulièrement tournée vers la paroi de fond 18, et une face extérieure opposée à la face intérieure.

Le dispositif de fixation 10 comporte au moins une plaquette de fixation 24 logée dans la gorge centrale 16. La plaquette de fixation 24 présente une dimension transversale, prise dans la direction transversale Y, supérieure à la dimension transversale de la fente longitudinale (c'est-à-dire la distance entre les bords des deux rebords 22), prise dans la même direction transversale Y. Ainsi, la plaquette de fixation 24 est maintenue verticalement dans la gorge centrale 16 par les rebords 22.

La plaquette de fixation 24 est insérée dans la gorge centrale 16 par l'une des extrémités longitudinales du rail 14.

Le dispositif de fixation 10 comporte des moyens 25 de solidarisation de la plaquette de fixation 24 avec l'élément 12. Plus particulièrement, comme cela est représenté sur la figure 2, les moyens de solidarisation 25 comportent une pluralité d'orifices traversants selon la direction verticale Z ménagés sur la plaquette de fixation 24. Plus particulièrement, les moyens de solidarisation 25 comportent au moins une vis 28 et au moins un pion de centrage 32, et la plaquette de fixation 24 comporte au moins un premier orifice 26 de passage d'une vis 28 respective, et au moins un second orifice 30 de passage d'un pion de centrage 32 respectif.

Dans l'exemple décrit, la plaquette de fixation 24 comporte deux premiers orifices 26, et un second orifice 30 agencé entre les premiers orifices 26, par exemple à égale distance de chacun de ces premiers orifices 26. L'utilisation de deux vis de fixation permet d'assurer la redondance de la fixation qui affranchit d'un dispositif d'anti-chute.

Il est à noter que les vis 28 et le pion de centrage 32 sont insérés dans les orifices 26, 30 correspondants avant l'insertion de la plaquette de fixation 24 dans la gorge centrale 16.

Lorsque la plaquette de fixation 24 est logée dans la gorge centrale 16, les vis 28 et le pion de centrage 32 s'étendent à travers la fente longitudinale, entre les rebords 22, et dépassent en saillie depuis la face extérieure de ces rebords 22.

Avantageusement, comme cela est représenté sur la figure 3, chaque premier orifice 26 comporte un épaulement intérieur, destiné à coopérer avec une tête 28A de la vis 28 correspondante. Ainsi, la tête de vis 28A est logée en majeure partie dans le premier orifice 26, afin de ne pas dépasser significativement de la plaquette de fixation 24, et ainsi afin de ne pas augmenter significativement son encombrement dans la direction verticale Z.

De même, chaque second orifice 30 comporte un épaulement intérieur destiné à coopérer avec une tête 32A du pion 32 correspondant, pour les mêmes raisons.

L'élément 12 à fixer comporte également des orifices de vissage 34 pour le passage des vis 28, et un orifice de centrage 36 pour le passage du pion de centrage 32. La distance entre les orifices de vissage 34 est égale à la distance entre les premiers orifices de passage 26, et les distances entre l'orifice de centrage 36 et chaque orifice de vissage 34 sont égales aux distances respectives entre le second orifice 30 et chaque premier orifice 26 correspondant. Ainsi, les orifices de vissage 34 sont en regard des premiers orifices 26 dès lors que l'orifice de centrage 36 est aligné avec le second orifice 30.

Le pion de centrage 32 présente une longueur supérieure à celle des vis 28. Le pion de centrage 32 présente une extrémité profilée, conique ou tronconique, pour faciliter son insertion dans l'orifice de centrage 36. Une fois le pion de centrage 32 inséré dans l'orifice de centrage 36, l'élément 12 peut être facilement positionné pour l'insertion des vis 28 dans les orifices de vissage 34 correspondants.

Le dispositif de fixation 10 comporte par ailleurs, pour chaque vis 28, un écrou 38 complémentaire.

Comme cela est représenté sur la figure 3, lorsque les écrous 38 sont vissés sur les vis 28 correspondantes, la plaquette 24 est plaquée contre la face intérieure des rebords 22 (plus particulièrement enserrée entre les têtes de vis 28A et la face intérieure des rebords 22), et l'élément 12 est plaqué contre la face extérieure des rebords 22 (plus particulièrement enserrée entre les écrous 38 et la face extérieure des rebords 22).

Avantageusement, au moins une rondelle 40 est intercalée entre chaque écrou 38 et l'élément 12. Dans l'exemple décrit, deux rondelles 40 sont intercalées entre chaque écrou 38 et l'élément 12, à savoir une première rondelle en contact avec l'élément 12, et une seconde rondelle en contact avec l'écrou 38, la première rondelle présentant un diamètre supérieur au diamètre de la seconde rondelle.

Avantageusement, un manchon 42 est agencé autour du pion de centrage 32. Ce manchon est maintenu en place par une épingle 44. Le manchon 42 permet de combler l'espace entre l'élément 12 et l'épingle 44 formant un arrêt mécanique. Le manchon 42 est alors en appui sur l'élément 12, permettant ainsi la fonction d'anti-chute.

On notera que le dispositif de fixation 10 selon l'invention est standardisé, si bien qu'il peut être utilisé aussi bien en toiture du véhicule ferroviaire qu'en sous-châssis de véhicule ferroviaire.

On peut donc prévoir un véhicule ferroviaire, comprenant à la fois un premier dispositif de fixation identique au dispositif de fixation 10 décrit précédemment, pour la fixation d'un premier élément sur le toit du véhicule, et un second dispositif de fixation identique au premier dispositif de fixation, pour la fixation d'un second élément en sous-châssis du véhicule.

On notera que le dispositif de fixation 10 permet de remplir trois fonctions, à savoir une fonction de fixation de l'élément 12, une fonction de centrage de l'élément 12, et une fonction anti-chute nécessaire lorsque le dispositif de fixation 10 est destiné au sous-châssis. Cette fonction anti-chute est assurée par le manchon 42 qui est retenu par l'arrêt mécanique 44.

L'invention n'est pas limitée au mode de réalisation précédemment décrit, et pourrait présenter diverses variantes complémentaires.

Par exemple, le dispositif de fixation 10 pourrait comporter une pluralité de plaquettes de fixation 24, notamment pour la fixation d'un élément 12 particulièrement volumineux.

Par ailleurs, chaque plaquette de fixation 24 pourrait présenter plus de deux premiers orifices 26 de passage de vis 28.

Il apparaît que l'invention présente les avantages suivants :
- Elle permet d'utiliser le même assemblage pour satisfaire les fixations d'équipements sur la toiture et sous-châssis ;
- Elle permet de couvrir plusieurs fonctions, avec une solution d'assemblage unique :
   A) Liaison directe entre l'équipement et la caisse,
   B) Intégration d'une fonction anti-chute si nécessaire, par l'ajout d'une bague et d'un arrêt mécanique.
   C) Pré-positionnement des équipements,
   D) Immobilisation pendant le montage, afin d'éviter tout mouvement relatif ;
- Elle permet de réduire le poids de plus de 50% en comparaison d'un système avec ferrures ; et
- Elle permet de réduire les coûts de plus de 60% en comparaison d'un système avec ferrures.

## Revendications

1. Dispositif (10) de fixation d'un élément (12) à un véhicule ferroviaire, plus particulièrement à un sous-châssis ou à un toit du véhicule ferroviaire, comprenant :
- un rail (14) destiné à être solidarisé au véhicule ferroviaire, comprenant une gorge longitudinale centrale (16) délimitée par deux rebords (22) agencés l'un en regard de l'autre, chaque rebord (22) présentant une face intérieure, tournée vers la gorge centrale (16), et une face extérieure,
- au moins une plaquette de fixation (24), logée dans la gorge centrale, et destinée à coopérer avec la face intérieure des rebords (22), et
- des moyens (25) de solidarisation, destinés à solidariser l'élément (12) avec la plaquette de fixation (24),
**caractérisé en ce qu'**il comporte un pion de centrage (32), porté par la plaquette de fixation (24).

2. Dispositif de fixation (10) selon la revendication 1, dans lequel les moyens de solidarisation (25) comportent :
- au moins un premier orifice de passage (26) ménagé dans la plaquette de fixation (24),
- pour chaque premier orifice de passage (26), une vis (28) passant au travers de cet orifice de passage (26), et passant entre les rebords (22) du rail (14), et
- pour chaque vis (28), un écrou (38) destiné à être vissé sur la vis (28) correspondante, et de préférence au moins une rondelle (40).

3. Dispositif de fixation (10) selon la revendication 2, dans lequel les moyens de solidarisation (25) comportent deux premiers orifices de passage (26), deux vis (28) et deux écrous (38).

4. Dispositif de fixation (10) selon la 3, dans lequel le pion de centrage (32) est agencé entre les deux vis (28), de préférence à égale distance de chacune de ces deux vis (28).

5. Dispositif de fixation (10) selon l'une quelconque des revendications 2 à 4, dans lequel le pion de centrage (32) présente une longueur supérieure à celle de chaque vis (28).

6. Véhicule ferroviaire, **caractérisé en ce qu'**il comporte au moins un dispositif de fixation (10) selon l'une quelconque des revendications précédentes.

7. Véhicule ferroviaire selon la revendication 6, comportant au moins un premier dispositif de fixation selon l'une quelconque des revendications 1 à 5, pour la fixation d'au moins un premier élément sur un toit du véhicule, et au moins un second dispositif de fixation selon l'une quelconque des revendications 1 à 5, pour la fixation d'au moins un second élément en sous-châssis du véhicule, les premier et second dispositifs de fixation étant identiques.
